# EUROPÄISCHE PATENTSCHRIFT

(11) **EP 0 919 076 B1**
(45) Veröffentlichungstag und Bekanntmachung des Hinweises auf die Patenterteilung: **31.10.2001**
(21) Anmeldenummer: 97939963.1
(22) Anmeldetag: 08.08.1997
(51) Int. Cl.: H02G 5/06, H02B 13/035

(54) **GEKAPSELTE, GASISOLIERTE HOCHSPANNUNGSANLAGE MIT GESCHOTTETEM VERBINDUNGSBAUSTEIN**
ENCAPSULATED GAS ISOLATED HIGH VOLTAGE INSTALLATION WITH A PARTITIONED CONNECTOR COMPONENT
INSTALLATION A HAUTE TENSION ISOLEE PAR GAS, ENCAPSULEE ET POURVUE D'UN COMPOSANT DE CONNEXION CLOISONNE

(30) Priorität: 16.08.1996 DE 19633857
(43) Veröffentlichungstag der Anmeldung: 02.06.1999
(73) Patentinhaber: SIEMENS AKTIENGESELLSCHAFT, 80333 München (DE)
(72) Erfinder: KELCH, Thomas, D-13465 Berlin (DE); KIEPER, Mario, D-14612 Falkensee (DE); BRÄUNLICH, Christoph, D-12529 Berlin (DE)
(86) Internationale Anmeldenummer: DE9701782
(87) Internationale Veröffentlichungsnummer: WO9808284

(56) Entgegenhaltungen:
- EP-A- 0 338 382
- PATENT ABSTRACTS OF JAPAN vol. 96, no. 5, 31.Mai 1996 & JP 08 019134 A (TOSHIBA CORP.), 19.Januar 1996
- PATENT ABSTRACTS OF JAPAN vol. 96, no. 2, 29.Februar 1996 & JP 07 284214 A (TOSHIBA CORO.), 27.Oktober 1995
- PATENT ABSTRACTS OF JAPAN vol. 17, no. 620 (E-1460), 16.November 1993 & JP 05 191912 A (MITSUBISHI ELECTRIC CORP.), 30.Juli 1993

## Beschreibung

Die Erfindung liegt auf dem Gebiet der Energieverteilung und ist bei der Ausgestaltung von gekapselten, gasisolierten Hochspannungsanlagen anzuwenden, die einen Innenleiter und einen konzentrisch dazu angeordneten Außenleiter aufweisen und bei denen zwischen zwei gekapselten Gasräumen ein Verbindungsbaustein angeordnet ist, der im wesentlichen aus einem Kapselungsgehäuse und einer sich axial erstreckenden mehrteiligen und auftrennbaren Innenleiterverbindung sowie aus zwei an den flanschartig gestalteten Enden des Kapselungsgehäuses angeordneten konischen Schottisolatoren besteht.

Für gekapselte, gasisolierte Hochspannungs-Schaltanlagen ist es bekannt, für Prüfzwecke zwischen zwei Gasräumen der Anlage einen Verbindungsbaustein anzuordnen, der im wesentlichen aus einem Kapselungsgehäuse und einer sich axial erstreckenden mehrteiligen und auftrennbaren Innenleiterverbindung sowie zwei an den flanschartig gestalteten Enden des Kapselungsgehäuses angeordneten, konischen Schottisolatoren besteht. Die mehrteilige Innenleiterverbindung besteht dabei aus zwei in jeweils einem der Schottisolatoren axial und radial fixierten, feststehenden Kontaktstift und zwei auf diese Kontaktstifte aufsteckbaren rohrförmigen Leiterteilen sowie einem mit diesen beiden Leiterteilen lösbar zu verbindenden Kontaktstück. Zur Montage dieser Leiterverbindung ist das Kapselungsgehäuse mit einer verschließbaren Montageöffnung versehen (IP-A-08019134).

Bei gasisolierten Energieübertragungsanlagen mit rohrförmigem Innenleiter und rohrförmigem Außenleiter werden ebenfalls Schottisolatoren verwendet, um die Gasräume der einzelnen Abschnitte der Anlage gegeneinander abzuschotten. Hierzu sind die Schottisolatoren üblicherweise im Bereich des Außenleiters zwischen zwei Verbindungsflanschen dicht eingeklemmt, während im Bereich des Innenleiters ein dichter Sitz auf dem Innenleiter oder ebenfalls eine dichtende Einspannung zwischen zwei Innenleiterteilen in Betracht kommt (US-A 3,331,911; US-A 4,053,700). Es ist weiterhin bekannt, im Bereich eines Schottisolators eine im montierten Zustand der Anlage auftrennbare Innenleiterverbindung vorzusehen, bei der zwei Längsabschnitte des Innenleiters klauenartig übereinander greifen und durch senkrecht zur Leiterachse durch die Klauen hindurchgreifende Stifte axial verriegelt sind. Im Bereich dieser Leiterverbindung wird ein spezielles Gehäuseteil verwendet, dessen einer Verbindungsflansch gegen die Achse der Anlage geneigt ist. Es können auch zwei solcher Gehäuseteile hintereinander angeordnet sein, so dass die Verbindungsflansche beider angrenzenden Anlagenabschnitte jeweils senkrecht zur Rohrachse verlaufen (US-A 4,323,720).

Ausgehend von einer Hochspannungsanlage mit den Merkmalen des Oberbegriffes des Patentanspruches 1 liegt der Erfindung die Aufgabe zugrunde, den Verbindungsbaustein so auszugestalten, dass damit zwei Abschnitte einer gasisolierten Energieübertragungsanlage, bei der sich ein rohrförmiger Innenleiter mittels isolierender Abstandhalter gegenüber einem rohrförmigen Außenleiter abstützt, gegeneinander abgeschottet werden können und ein einfach aufgebauter Prüfzugang zu den Innenleitern der angrenzenden Gasräume ermöglicht ist.

Zur Lösung dieser Aufgabe ist gemäß der Erfindung vorgesehen, dass die Innenleiterverbindung aus vier rohrförmig ausgebildeten Leiterstücken besteht, von denen das erste und das vierte Leiterstück unter Verwendung je eines weiteren, auf der anderen Seite des jeweiligen Schottisolators angeordneten Leiterstücks axial fixiert sind, von denen weiterhin das erste und das zweite sowie das zweite und das dritte Leiterstück jeweils klauenförmig lösbar miteinander verbunden sind und von denen das dritte steckbar mit dem vierten, axial fixierten Leiterstück verbunden ist; für die Erfindung ist weiterhin wesentlich, dass das Kapselungsgehäuse im Bereich des ersten und/oder des vierten Leiterstückes mit weiteren verschließbaren Öffnungen versehen ist.

Bei einer derartigen Ausgestaltung des Verbindungsbausteines und Anordnung des Verbindungsbausteines zwischen zwei Abschnitten einer gasisolierten Energieübertragungsanlage kann der Innenleiter der Anlage auf einfache Weise durch Herausnehmen des zweiten Leiterstückes der mehrteiligen Innenleiterverbindung aufgetrennt werden, so daß die beidseits des Verbinderbausteines befindlichen Anlagenabschnitte unabhängig voneinander für Prüfzwecke zugänglich sind. Hierzu können auf das erste und das dritte Leiterstück spezielle Kontaktstücke aufgesetzt werden, die dann mittels eines auf die Montageöffnung aufgesetzten Prüfanschlusses wechselseitig zugänglich sind. Über die weiteren verschließbaren Öffnungen im Kapselungsgehäuse des Verbinderbausteines kann der Verbinderbaustein entlüftet und wieder mit Gas gefüllt werden, auch können über solche Öffnungen Erdungen des Innenleiters vorgenommen werden.

Der neue Verbinderbaustein kann auch zum Anschluss weiterer Anlagenteile an die Energieübertragungsanlage, beispielsweise zum Anschluss eines Abzweiges oder eines Überspannungsableiters verwendet werden, wenn das zweite Leiterstück der vierteiligen Innenleiterverbindung T-förmig ausgebildet ist und das Kapselungsgehäuse mit einem flanschartigen, konzentrisch zum abzweigenden Teil des zweiten Leiterstückes verlaufenden Anschlußstutzen versehen ist, wobei diesem Anschlußstutzen ebenfalls ein Schottisolator zugeordnet ist, in dem das abzweigende Leiterteil des zweiten Leiterstückes axial geführt und radial fixiert ist.

Um den Verbinderbaustein montagefreundlich mit den beiden angrenzenden Gasräumen der Energieübertragungsanlage zuverbinden, ist es weiterhin vorteilhaft, wenn die Kapselungen der angrenzenden Gasräume jeweils aus einem rohrförmigen Außenleiter bestehen, der an seinem dem Verbindungsbaustein zugeordneten Ende mit einem rohrartigen, gegossenen Gehäuseteil versehen ist, wobei dieses Gehäuseteil mit einem Anschlußflansch zur Verbindung mit dem Kapselungsgehause des Verbindungsbausteines, mit einer am Umfang flanschartig angeordneten Montageöffnung und mit wenigstens einer weiteren, verschließbaren, am Umfang angeordneten Öffnung versehen ist. Die weiteren Öffnungen dienen dabei insbesondere als Gasanschluß und als Einführungsstellen zum Einsetzen von Sensoren in den Gasraum.

Ein Ausführungsbeispiel einer gemäß der Erfindung ausgebildeten, als Energieübertragungsanlage ausgestalteten Hochspannungsanlage sowie ergänzende Ausgestaltungen des hierbei verwendeten Verbindungsbausteines sind in den Figuren 1 bis 5 dargestellt. Dabei zeigt
- Figur 1: eine Energieübertragungsanlage mit rohrförmigem Innenleiter und rohrförmigem Außenleiter im Bereich eines Verbindungsbausteines,
- Figur 2: den Verbindungsbaustein für sich,
- Figur 3: den Verbindungsbaustein in einer für Prüfzwecke umgestalteten Ausführung,
- Figur 4: den Übergang vom Verbindungsbaustein auf einen anschließenden Gasraum und
- Figur 5: die Ausgestaltung des Verbindungsbausteines zum Anschluß eines weiteren Anlagenteiles in Form eines Überspannungsableiters.

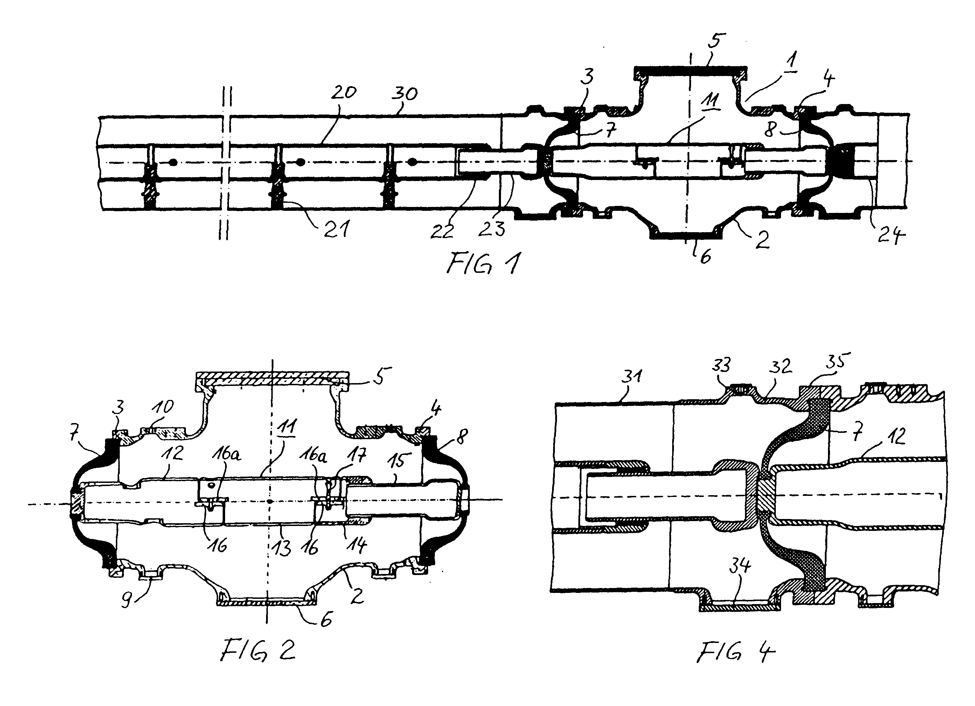

Figur 1 zeigt den Verbindungsbaustein 1, der im Zuge einer gasisolierten Rohrleiteranlage mit dem rohrförmigen Innenleiter 20 und dem rohrförmigen Außenleiter 30 angeordnet ist. Wie auch aus Figur 2 zu ersehen ist, besteht der Verbindungsbaustein im wesentlichen aus einem Kapselungsgehäuse 2 und einer mehrteiligen, auftrennbaren Innenleiterverbindung 11, wobei das Kapselungsgehäuse 2 endseitige Verbindungsflansche 3 und 4, eine flanschartige Montageöffnung 5 und eine zusätzliche Montageöffnung 6 aufweist. Im Bereich der Verbindungsflansche 3 und 4 sind scheibenförmige Schottisolatoren 7 und 8 angeordnet, die konisch bzw. schüsselartig ausgebildet sind und in die angrenzenden Gasräume 18 und 19 der gasisolierten Rohrleiteranlage hineinragen.

Der rohrförmige Innenleiter 20 der Rohrleiteranlage ist mit Hilfe von in Abständen angeordneten isolierenden Abstützungen 21 im rohrförmigen Außenleiter 30 angeordnet. Der rohrförmige Innenleiter 20 endet in einer Steckverbindung 22, deren Steckkontakt 23 mit der Innenleiterverbindung 11 des Verbindungsbausteines 1 verbunden ist. Auf der anderen Seite des Verbindungsbausteines ist ein Endstück 24 des sich dort fortsetzenden rohrförmigen Innenleiters angeordnet, das durch den Schottisolator 8 hindurch mit einem Leiterstück der Innenleiterverbindung 11 verbunden ist. Im Bereich der beiden Schottisolatoren 7 und 8 bilden die Innenleiterverbindungen jeweils einen Leiterfestpunkt, wie er in der am gleichen Tage eingereichten Deutschen Gebrauchsmusteranmeldung 296 .. ... (Siemen-Aktenzeichen 96 G 4113) beschrieben ist.

Gemäß Figur 2 besteht die Innenleiterverbindung 11 des Verbindungsbausteines 1 aus vier rohrförmig ausgebildeten Leiterstücken, von denen das erste Leiterstück 12 im Schottisolator 7 axial und radial fixiert ist, und von denen das vierte Leiterstück 15, welches als rohrförmiger Steckkontakt ausgebildet ist, am Schottisolator 8 radial und axial fixiert ist. Auf dem vierten Leiterstück 15 sitzt das dritte Leiterstück 14 auf, das ebenfalls rohrförmig ausgebildet und mit einer als steckbuchensartiges Kontaktstück 16 ausgebildeten Steuerelektrode versehen ist. Das Kontaktstück 16 kontaktiert über ringförmige Lamellenkontakte das Leiterstück 15.

Die Leiterstücke 12 und 14 sind jeweils zur Mitte des Verbindungsbausteines 1 hin mit einer Klaue 16 versehen, in die entsprechende Klauen 16a des zweiten rohrförmigen Leiterstükkes 13 eingreifen. Im Bereich dieser Klauen kann das Leiterstück 13 mit den beiden Leiterstücken 12 und 14 durchmessergleich mittels einer Schraubverbindung 17 fest verbunden werden.

Das Kapselungsgehäuse 2 ist noch mit zusätzlichen kleineren Montageöffnungen 9 und verschließbaren Bohrungen 10 versehen, wobei die Bohrungen 10 beispielsweise zur Entlüftung des Innenraumes bwz. zum Einfüllen von Isoliergas sowie zur Verbindung mit den anschließenden Gasräumen der Rohrleiteranlage dienen.

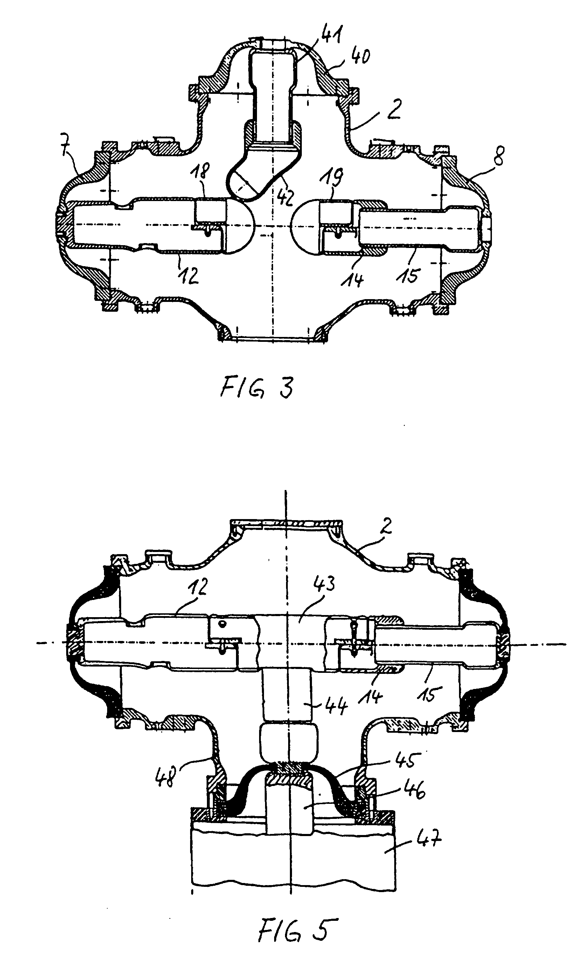

Durch die Motageöffnung 5 des Verbindungsbausteines 1 hindurch kann das zweite Leiterstück 13 gelöst und entfernt werden. Für Prüfzwecke kann dann gemäß Figur 3 auf das erste Leiterstück 12 und auf das dritte Leiterstück 14 ein Kontaktstück 18 bzw. 19 mit kugelförmiger Elektrode aufgesetzt werden. An diese Kontaktstücke kann dann mit Hilfe eines drehbaren Kontaktstückes 42 eine Prüf- oder Meßspannung herangeführt werden, wozu in die Montageöffnung 5 ein Schottisolator 40 mit einer Leiterdurchführung 41 aufzusetzen ist, die mittels entsprechender Anschlußflansche usw. auch gasdicht ausgeführt werden kann.

Gemäß Figur 4 ist der an den Verbindungsbaustein angrenzende Außenleiter 30 am Ende des Leiterrohres 31 mit einem gegossenen Gehäuseteil 32 verbunden, das einen rohrförmigen Anschlußflansch 35 aufweist. Dieser Anschlußflansch dient zur Fixierung des Schottisolators 7 bzw. - auf der anderen Seite des Verbindungsbausteines 1 - zur axialen Fixierung des Schottisolators 8. Der Anschlußflansch 35 ist mit einer verschließbaren Öffnung 33, beispielsweise zum Zuführen von Isoliergas, und mit einer Montageöffnung 34 versehen, die beispielsweise zum Einbringen von Sensoren in den Gasraum 18 dient.

Gemäß Figur 5 ist an den Verbindungsbaustein 1 unter Zwischenschaltung des Schottisolators 45 ein Überspannungsableiter 47 angeflanscht und über einen Leiteranschluß 6 durch den Anschlußstutzen 48 hindurch mit dem Leiterstück 43 der Innenleiterverbindung des Verbindungsbausteines verbunden. Das zweite Leiterstück 43 der Innenleiterverbindung ist hierbei T-förmige gestaltet, wobei das abzweigende Rohrstück 44 fest oder steckbar mit dem Leiteranschluß 46 verbunden ist.

## Patentansprüche

1. Gekapselte, gasisolierte Hochspannungsanlage mit Innen- und Außenleiter und mit einem zwischen zwei gekapselten Gasräumen der Hochspannungsanlage angeordneten Verbindungsbaustein (1),
der im wesentlichen aus einem Kapselungsgehäuse (2) und einer sich axial erstreckenden, mehrteiligen und auftrennbaren Innenleiterverbindung (11) sowie zwei an den flanschartig gestalteten Enden des Kapselungsgehäuses angeordneten konischen Schottisolatoren (7,8) besteht,
wobei ein erstes Teil (12) der Innenleiterverbindung (11) an dem einen Schottisolator (7) und ein anderes Teil (15) der Innenleiterverbindung (11) an dem anderen Schottisolator (8) axial und radial fixiert und ein mittleres Teil (13) der Innenleiterverbindung lösbar mit den beiden angrenzenden Teilen der Innenleiterverbindung (11) verbunden ist, wozu das Kapselungsgehäuse (2) mit einer verschließbaren Montageöffnung (5) versehen ist, und wobei die Schottisolatoren (7,8) mittels einer Flanschverbindung (3,4) axial fixiert sind,
**dadurch gekennzeichnet,**
**dass** der Verbindungsbaustein (1) zwischen zwei Abschnitten einer gasisolierten Energieübertragungsanlage angeordnet ist, bei der sich ein rohrförmiger Innenleiter (20) mittels isolierender Abstandhalter (21) gegenüber einem rohrförmigen Außenleiter (30) abstützt,
**dass** die Innenleiterverbindung (11) aus vier rohrförmig ausgebildeten Leiterstücken (12,13,14,15) besteht,
von denen das erste (12) und das vierte (15) Leiterstück unter Verwendung je eines weiteren, auf der anderen Seite des Schottisolators (7,8) angeordneten Leiterstückes (23,24) axial fixiert sind und
von denen das erste (12) und das zweite (13) sowie das zweite (13) und das dritte (14) Leiterstück jeweils klauenförmig (16,16a) lösbar miteinander verbunden sind und von denen das dritte (14) steckbar mit dem vierten (15), axial fixierten Leiterstück verbunden ist,
**dass** das Kapselungsgehäuse (2) im Bereich des ersten und/oder des vierten Leiterstückes (12,15) mit weiteren verschließbaren Öffnungen (9,10) versehen ist.

2. Gekapselte Hochspannungsanlage nach Anspruch 1,
**dadurch gekennzeichnet,**
**dass** das zweite Leiterstück (43) der vierteiligen Innenleiterverbindung T-förmig ausgebildet ist
und **dass** das Kapselungsgehäuse (2) mit einem flanschartigen, konzentrisch zum abzweigenden Teil (44) des zweiten Leiterstückes (43) verlaufenden Anschlussstutzen (48) versehen ist, wobei diesem Anschlussstutzen ebenfalls ein Schottisolator (45) zugeordnet ist, in dem das abzweigende Leiterteil (44) des zweiten Leiterstückes (43) axial geführt und radial fixiert ist.

3. Hochspannungsanlage nach Anspruch 1 oder 2,
**dadurch gekennzeichnet,**
**dass** die Kapselungen der angrenzenden Gasräume (18,19) jeweils aus einem rohrförmigen Außenleiter (31) bestehen, der an seinem dem Verbindungsbaustein (1) zugeordneten Ende mit einem rohrartigen, gegossenen Gehäuseteil (32) versehen ist, wobei dieses Gehäuseteil mit einem Anschlussflansch (35) zur Verbindung mit dem Kapselungsgehäuse (2) des Verbindungsbausteines, mit einer am Umfang flanschartig angeordneten Montageöffnung (34) und mit wenigstens einer weiteren verschließbaren, ebenfalls am Umfang angeordneten Öffnung (33) versehen ist.

## Claims

1. Enclosed, gas-insulated high-voltage installation having an inner conductor and an outer conductor and having a connection module (1) arranged between two enclosed gas chambers of the high-voltage installation,
which connection module consists substantially of an enclosure housing (2) and an axially-extending, multipart and unpluggable inner-conductor assembly (11) and
also of two conical partition insulators (7, 8) arranged on the ends of the enclosure housing, which ends are shaped in a flange-like manner,
wherein a first portion (12) of the inner-conductor assembly (11) is axially and radially fixed to the one partition insulator (7) and another portion (15) of the inner-conductor assembly (11) is axially and radially fixed to the other partition insulator (8), and a centre portion (13) of the inner-conductor assembly is detachably connected to the two adjoining portions of the inner-conductor assembly (11), for which purpose the enclosure housing (2) is provided with a closable assembly opening (5), and wherein the partition insulators (7, 8) are axially fixed by means of a flanged coupling (3, 4),
**characterised**
**in that** the connection module (1) is arranged between two sections of a gas-insulated power-transmission installation, in which a tubular inner conductor (20) is supported with respect to a tubular outer conductor (30) by means of insulating spacers (21),
**in that** the inner-conductor assembly (11) consists of four tubularly constructed conductor pieces (12, 13, 14, 15),
of which the first (12) and fourth (15) conductor pieces are axially fixed using a further conductor piece (23, 24) arranged on the other side of the partition insulator (7, 8) and
of which the first (12) and second (13) and also the second (13) and third (14) conductor pieces are in each case detachably connected to each other in a claw-like manner (16, 16a), and of which the third conductor piece (14) is connected to the fourth, axially fixed conductor piece (15) in a pluggable manner, and
**in that** the enclosure housing (2) is provided, in the region of the first and/or fourth conductor piece (12, 15), with further closable openings (9, 10).

2. Enclosed high-voltage installation according to claim 1, **characterised**
**in that** the second conductor piece (43) of the four-part inner-conductor assembly is T-shaped, and
**in that** the enclosure housing (2) is provided with a flange-type connection piece (48) which extends concentrically with the branching portion (44) of the second conductor piece (43), this connection piece likewise being assigned a partition insulator (45), in which the branching conductor portion (44) of the second conductor piece (43) is axially guided and radially fixed.

3. High-voltage installation according to claim 1 or 2, **characterised in that** the enclosures of the adjoining gas chambers (18, 19) each consist of a tubular outer conductor (31), which is provided, at its end which is associated with the connection module (1), with a tubular, cast housing portion (32), this housing portion being provided with a connecting flange (35) for connection to the enclosure housing (2) of the connection module, with an assembly opening (34) arranged in a flange-like manner at the periphery, and with at least one further closable opening (33), likewise arranged at the periphery.

## Revendications

1. Installation à haute tension encapsulée, isolée par du gaz, comportant un conducteur intérieur et un conducteur extérieur et comportant un élément (1) de liaison monté entre deux chambres pour du gaz encapsulées de l'installation à haute tension,
qui est constitué essentiellement d'un boîtier (2) d'encapsulation et d'une liaison (11) de conducteur intérieure en plusieurs parties, s'étendant axialement et pouvant être défaite, ainsi que de deux isolants (7, 8) à cloison coniques, disposés aux extrémités, conformées à la façon de bride, du boîtier d'encapsulation,
une première partie (12) de la liaison (11) de conducteur intérieure étant immobilisée axialement et radialement sur l'un (7) des isolants à cloison et une autre partie (15) de la liaison (11) de conducteur intérieure étant immobilisée axialement et radialement sur l'autre isolant (8) à cloison, et une partie (13) médiane de la liaison de conducteur intérieure étant reliée de manière amovible aux deux parties adjacentes de la liaison (11) de conducteur intérieure, le boîtier (2) d'encapsulation étant muni à cet effet d'une ouverture (5) de montage pouvant être fermée, et les isolants (7, 8) à cloison étant immobilisés axialement au moyen d'une liaison (3, 4) par bride,
**caractérisée**
**en ce que** l'élément (1) de liaison est monté entre deux parties d'une installation de transport d'énergie isolée par du gaz, dans laquelle un conducteur (20) intérieur tubulaire s'appuie au moyen d'entretoises (21) isolantes sur un conducteur (30) extérieur tubulaire,
**en ce que** la liaison (11) de conducteur intérieure est constituée de quatre tronçons (12, 13, 14, 15) de conducteur réalisés de manière tubulaire,
dont le premier (12) et le quatrième (15) sont immobilisés axialement en utilisant chaque fois un tronçon (23, 24) de conducteur supplémentaire, disposé de l'autre côté de l'isolant (7, 8) à cloison, et
dont le premier (12) et le deuxième (13) ainsi que le deuxième (13) et le troisième (14) sont reliés l'un à l'autre de manière amovible chaque fois en forme de griffe et dont le troisième (14) est relié avec possibilité d'enfichage avec le quatrième tronçon (15) de conducteur immobilisé axialement,
**en ce que** le boîtier (2) d'encapsulation est muni dans la région du premier (12) et/ou du quatrième (15) tronçon de conducteur d'ouvertures (9, 10) supplémentaires pouvant être fermées.

2. Installation à haute tension encapsulée suivant la revendication 1,
**caractérisée**
**en ce que** le deuxième tronçon (43) de conducteur de la liaison de conducteur intérieure en quatre parties est réalisé en forme de T
et **en ce que** le boîtier (2) d'encapsulation est muni d'un embout (48) de raccordement en forme de bride, s'étendant concentriquement à la partie (44) qui bifurque du deuxième tronçon (43) de conducteur, un isolant (45) à cloison, dans lequel la partie (44) de conducteur qui bifurque du deuxième tronçon (43) de conducteur est guidée axialement et immobilisée radialement étant également associé à cet embout de raccordement.

3. Installation à haute tension suivant la revendication 1 ou 2, **caractérisée en ce que** les encapsulations des chambres (18, 19) pour du gaz adjacentes sont constituées chaque fois d'un conducteur (31) extérieur tubulaire, qui est muni à son extrémité associée à l'élément (1) de liaison d'une pièce (32) de boîtier tubulaire obtenue par coulée, cette pièce de boîtier étant munie d'une bride (35) de raccordement pour la liaison au boîtier (2) d'encapsulation de l'élément de liaison, d'une ouverture (34) de montage ménagée sur le pourtour à la façon d'une bride et d'au moins une ouverture (33) supplémentaire, pouvant être fermée, ménagée également sur le pourtour.
